# EUROPÄISCHE PATENTANMELDUNG

(11) **EP 1 531 244 A1**
(43) Veröffentlichungstag der Anmeldung: **18.05.2005**
(21) Anmeldenummer: 03104174.2
(22) Anmeldetag: 13.11.2003
(51) Int. Cl.: F02D 9/02, F02D 9/04, F02D 13/02, F02B 27/00

(54) **Ventilanordnung zur Verwendung bei Verbrennungsmotoren**

(71) Anmelder: Ford Global Technologies, LLC, A subsidary of Ford Motor Company, Dearborn, MI 48126 (US)
(72) Erfinder: Figura, Michael Georg, 41542, Dormagen (DE); Kluge, Torsten, 51491, Overath (DE)
(74) Vertreter: Drömer, Hans-Carsten, Dipl.-Ing.

(57) **Zusammenfassung**

Eine erfindungsgemäße Ventilanordnung zum Regulieren eines Fluidstroms in einen Zylinder (10) oder aus einem Zylinder (10) eines Verbrennungsmotors umfaßt mindestens zwei Einlaßventile (14A, 14B) zum Einlassen des Fluidstroms in den Zylinder (10) und/oder mindestens zwei Auslaßventile zum Auslassen des Fluidstroms aus dem Zylinder (10). Die mindestens zwei Einlaßventile (14A, 14B) und/oder die mindestens zwei Auslaßventile sind dabei in Strömungsrichtung des Fluids in Reihe geschaltet, d.h. in Strömungsrichtung hintereinander angeordnet.

## Beschreibung

Die vorliegende Erfindung betrifft eine Ventilanordnung zum Regulieren eines Fluidstroms in einen Zylinder eines Verbrennungsmotors oder aus einem Zylinder eines Verbrennungsmotors. Sie betrifft außerdem einen Verbrennungsmotor sowie ein Steuerverfahren zum Steuern der Fluidmenge, welche einem Zylinder eines Verbrennungsmotors zugeführt wird, und/oder der Fluidmenge, welche aus einem Zylinder eines Verbrennungsmotors abgeführt wird.

Die im Zylinder eines Verbrennungsmotors, und insbesondere eines Ottomotors, während der Verbrennung vorhandene Frischluft ist eine entscheidende Größe für das vom Motor zur Verfügung gestellte Drehmoment. Daher erfolgt die Leistungssteuerung eines Motors in der Regel durch Steuern des Luftmassenstroms, mit dem den Zylindern des Motors Frischluft zugeführt wird. Zum Einstellen der Frischluftzufuhr wird dabei eine Drosselklappe verwendet.

Bei maximaler Motorleistung ist die Drosselklappe vollständig geöffnet. Ist die Drosselklappe hingegen nicht vollständig geöffnet, so verringert sich die Zufuhr an Frischluft gegenüber der Frischluftzufuhr bei vollständig geöffneter Drosselklappe, und damit auch die Leistung des Motors. Bei geringen Motordrehzahlen und insbesondere bei Lehrlaufdrehzahl verringert der aerodynamische Widerstand der Drosselklappe jedoch die Leistung des Motors.

Es ist daher Aufgabe der vorliegenden Erfindung, eine verbesserte Ventilanordnung zum Steuern des Fluidstroms in einen Zylinder oder aus einem Zylinder eines Verbrennungsmotors zur Verfügung zu stellen.

Es ist eine weitere Aufgabe der vorliegenden Erfindung, einen verbesserten Verbrennungsmotor zur Verfügung zu stellen.

Noch eine weitere Aufgabe der vorliegenden Erfindung ist es, ein verbessertes Steuerverfahren zum Steuern der Fluidmenge, welche einem Zylinder eines Verbrennungsmotors zugeführt wird, und/oder der Fluidmenge, welche aus einem Zylinder eines Verbrennungsmotors abgeführt wird, zur Verfügung zu stellen.

Die erste Aufgabe wird durch eine Ventilanordnung nach Anspruch 1, die zweite Aufgabe durch einen Verbrennungsmotor nach Anspruch 2 und die dritte Aufgabe durch ein Steuerverfahren nach Anspruch 5 gelöst. Die abhängigen Ansprüche enthalten vorteilhafte Ausgestaltungen der Erfindung.

Eine erfindungsgemäße Ventilanordnung zum Regulieren eines Fluidstroms in einen Zylinder oder aus einem Zylinder eines Verbrennungsmotors, insbesondere eines Ottomotors, umfaßt mindestens zwei Einlaßventile zum Einlassen des Fluidstroms in den Zylinder und/oder mindestens zwei Auslaßventile zum Auslassen des Fluidstroms aus dem Zylinder. Die mindestens zwei Einlaßventile und/oder die mindestens zwei Auslaßventile sind dabei in Strömungsrichtung des Fluids in Reihe geschaltet, d. h. in Strömungsrichtung hintereinander angeordnet.

Die erfindungsgemäße Ventilanordnung ermöglicht es, die Fluidzufuhr in einen Zylinder bzw. die Fluidabfuhr aus einem Zylinder eines Verbrennungsmotors zu steuern und dabei den aerodynamischen Widerstand bei niedrigen Motordrehzahlen gegenüber der Steuerung mittels einer Drosselklappe zu vermindern. Dies kann zu einem geringeren Kraftstoffverbrauch führen, insbesondere für große Verbrennungsmotoren, die die meiste Zeit mit niedrigen Drehzahlen betrieben werden.

Ein erfindungsgemäßer Verbrennungsmotor, der insbesondere als Ottomotor ausgestaltet sein kann, zeichnet sich dadurch aus, daß er mindestens einen Zylinder und eine erfindungsgemäße, dem Zylinder zugeordnete Ventilanordnung umfaßt. Der erfindungsgemäße Verbrennungsmotor weist gegenüber herkömmlichen Verbrennungsmotoren einen geringeren Kraftstoffverbrauch bei niedrigen Motordrehzahlen, insbesondere bei Leerlaufdrehzahl, auf.

In einer weiteren Ausgestaltung des erfindungsgemäßen Verbrennungsmotors sind die Einlaßventile und/oder die Auslaßventile derart ausgestaltet und angeordnet, daß ihre Ventilhübe individuell einzustellen sind. Dies ermöglicht ein getrenntes Steuern der Ventilhübe der mindestens zwei Einlaßventile bzw. der mindestens zwei Auslaßventile. In einer Weiterbildung umfaßt der erfindungsgemäße Verbrennungsmotor daher außerdem eine Steuereinrichtung, die zum Ausgeben von individuellen Einlaßventilsteuergrößen an die einzelnen Einlaßventile und/oder zum Ausgeben von individuellen Auslaßventilsteuergrößen an die einzelnen Auslaßventile ausgestattet ist. Das Ausgeben der individuellen Steuergrößen ermöglicht dabei beispielsweise das Einführen von Phasenverschiebungen zwischen den Hubkurven der einzelnen Einlaßventile bzw. zwischen den Hubkurven der einzelnen Auslaßventile, so daß ein Steuern der Fluidzufuhr bzw. der Fluidabfuhr durch Variation der Phasenverschiebung möglich ist.

Das erfindungsgemäße Steuerverfahren ist insbesondere zum Steuern der Fluidmenge, die einem Zylinder eines erfindungsgemäßen Verbrennungsmotors zugeführt oder aus einem Zylinder eines erfindungsgemäßen Verbrennungsmotors abgeführt wird, ausgestaltet. Es zeichnet sich dadurch aus, daß das Steuern der zugeführten und/oder abgeführten Fluidmenge anhand der Phasenverschiebung zwischen den Ventilhubkurven der einzelnen Einlaßventile bzw. zwischen den Ventilhubkurven der einzelnen Auslaßventile erfolgt.

Wenn das Öffnen der Ventile phasenverschoben erfolgt, können sie auch bei niedrigen Drehzahlen vollständig geöffnet werden. Dadurch verringert sich der aerodynamische Widerstand gegenüber der Verwendung einer Drosselklappe. Je kleiner die Phasenverschiebung zwischen den Ventilhubkurven der einzelnen Einlaß- bzw. der einzelnen Auslaßventile ist, desto größer ist der dem Verbrennungsmotor zugeführte bzw. abgeführte Fluidstrom. Zum Durchführen des erfindungsgemäßen Steuerverfahrens ist keine im Fluidstrom angeordnete Drosselklappe nötig.

Im erfindungsgemäßen Steuerverfahren wird die Phasenverschiebung der Ventilhubkurven insbesondere in der Abhängigkeit von der Motordrehzahl eingestellt. Dadurch kann der Kraftstoffverbrauch bei geringen Motordrehzahlen und bei Leerlaufzahl verringert werden.

Das erfindungsgemäße Steuerverfahren ist insbesondere derart ausgestaltet, daß die Phasenverschiebung zwischen den Ventilhubkurven bei hoher Motordrehzahl ein Minimum aufweist. Insbesondere kann die Phasenverschiebung bei hoher Motordrehzahl den Wert Null besitzen. Bei niedriger Motordrehzahl, insbesondere bei Leerlaufdrehzahl, weist die Phasenverschiebung zwischen den Ventilhubkurven dagegen ein Maximum auf, so daß die Fluidzufuhr bzw. die Fluidabfuhr verringert wird.

Weitere Merkmale, Eigenschaften und Vorteile der vorliegenden Erfindung werden nachfolgend anhand eines Ausführungsbeispieles erläutert, wobei auf die beiliegenden Figuren Bezug genommen wird.
- Fig. 1: zeigt einen Ausschnitt aus einem Verbrennungsmotor nach Stand der Technik.
- Fig. 2: zeigt in schematischer Darstellung die erfindungsgemäße Ventilanordnung in einem Verbrennungsmotor.
- Fig. 3: ist eine schematische Darstellung zum Verdeutlichen der Ventilsteuerung im erfindungsgemäßen Verbrennungsmotor.
- Fign. 4a - 4c: zeigen verschiedene Phasenverschiebungen der Hubkurven zweier in Reihe geschalteter Einlaßventile.

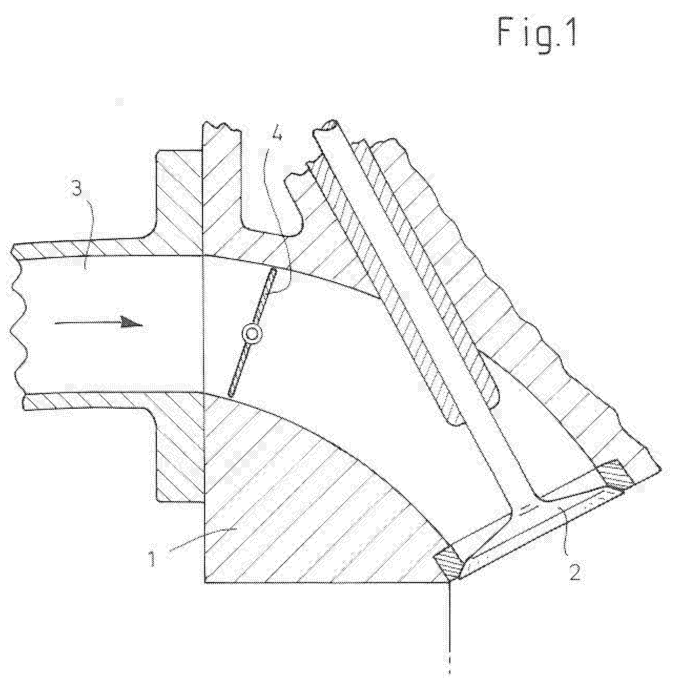

Fig. 1 zeigt einen Ausschnitt aus einem konventionellen Ottomotor. Es sind ein Zylinderkopf 1, ein Einlaßventil 2, ein Frischluftzufuhrrohr 3 sowie eine Drosselklappe 4 zum Einstellen der Frischluftzufuhr in den Zylinder des Motors dargestellt. In Fig. 1 ist die Drosselklappe 4 in ihrer geschlossenen Stellung dargestellt.

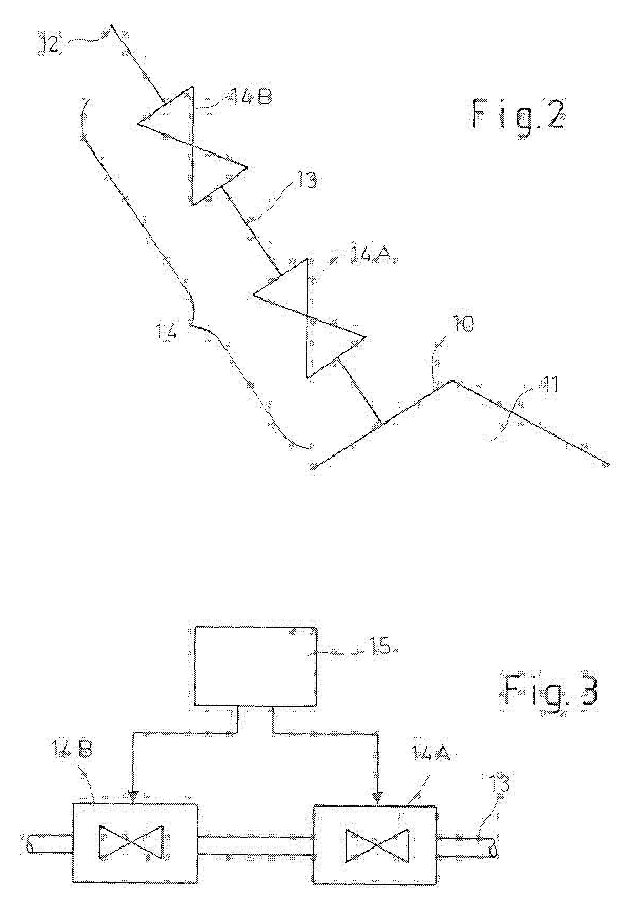

Ein Ausführungsbeispiel für einen Motor mit einer erfindungsgemäßen Ventilanordnung ist schematisch in Fig. 2 dargestellt. Es sind ein Zylinderkopf 10 mit einer darunter befindlichen Verbrennungskammer 11, ei n Saugrohr 12, ein Einlaßkanal 13 und eine Ventilanordnung 14 zu erkennen. Der Einlaßkanal 13 verbindet das Ansaugrohr 12 mit der Verbrennungskammer 11. Im Einlaßkanal 13 sind in Strömungsrichtung des durch das Ansaugrohr 12 angesaugten Luftmassenstromes hintereinander zwei Ventile 14a und 14b angeordnet, mit deren Hilfe der Luftmassenstrom zur Verbrennungskammer 11 gesteuert werden kann.

Den Ventilen 14A, 14B ist eine Steuereinheit 15 zugeordnet, die mit den Ventilen 14A, 14B zum Ausgeben von Steuersignalen in Signalverbindung steht (Fig. 3). Die Steuerung des Luftmassenstroms erfolgt durch phasenverschobenes Öffnen der beiden Ventile. Je nach Größe der Phasenverschiebung erreicht ein größerer oder ein kleinerer Luftmassenstrom die Verbrennungskammer 11. Zum Steuern des Ventilhubes und damit der Phasenverschiebung können den beiden Ventilen beispielsweise getrennte Nockenwellen zugeordnet sein, wobei sich die Winkellage der Nocken der beiden Nockenwellen relativ zueinander verstellen läßt.

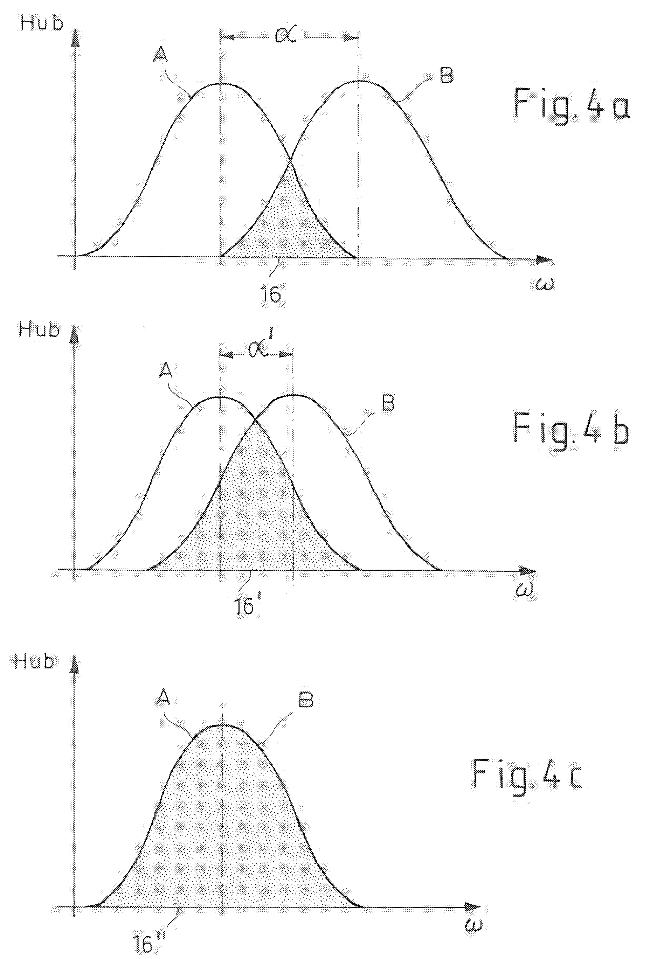

Die Steuerung des Luftmassenstroms mittels phasenverschobener Hubkurven der Ventile 14A, 14B ist in den Fign. 4a bis 4c dargestellt. Die Figuren zeigen den Hub der Ventile 14A, 14B als Funktion des Drehwinkels der dem jeweiligen Ventil zugeordneten Nockenwelle. Dabei stellt die Kurve A die Hubkurve des Ventils 14A und die Kurve B die Hubkurve des Ventils 14B dar.

Fig. 4a zeigt die Phasenverschiebung der Hubkurven A, B bei Leerlauf. Die Hubkurve B ist in diesem Fall gegenüber der Hubkurve A um den Winkel α phasenverschoben. Diese Phasenverschiebung läßt sich beispielsweise einstellen, indem die dem Ventil A zugeordnete Nockenwelle gegenüber der im Ventil B zugeordneten Nockenwelle um den Winkel α verdreht wird, d.h. der Nullphasenwinkel (auch Phasenkonstante genannt) der dem Ventil B zugeordneten Nockenwelle wird gegenüber der Nullphasenwinkel der dem Ventil A zugeordneten Nockenwelle um den Winkel α verdreht.

In Fig. 4a wird zuerst das Ventil 14A geöffnet, bevor das Ventil 14B geöffnet wird. Die Phasenverschiebung ist dabei derart gewählt, daß nur ein relativ kurzzeitiges gleichzeitiges Öffnen beider Ventile erfolgt. Anders gesagt, der Ventilüberschneidung ist relativ gering. Dadurch kann nur ein geringer Luftmassenstrom die Verbrennungskammer 11 erreichen. Die in Fig. 4a dargestellte Phasenbeziehung zwischen den beiden Hubkurven der Ventile 14A, 14B stellt die Phasenbeziehung bei Leerlaufdrehzahl des Motors dar.

Die Phasenbeziehung bei niedriger Motorleistung ist in Fig. 4b dargestellt. Der Winkel α', um den die beiden Nockenwellen gegeneinander verdreht sind, beträgt nur etwa die Hälfte der Phasenverschiebung α bei Leerlaufdrehzahl. Dadurch vergrößert sich der Ventilüberschneidung gegenüber Leerlaufdrehzahl deutlich, so daß ein größerer Luftmassenstrom die Verbrennungskammer 11 durch den Einlaßkanal 13 erreicht.

Bei hoher Motorleistung, d.h. bei hoher Motordrehzahl, wird die Phasenverschiebung zwischen den beiden Hubkurven A, B auf Null zurückgefahren, d.h. die beiden Nockenwellen sind nicht mehr gegeneinander verdreht und drehen daher synchron. Die beiden Ventile 14A, 14B weisen in diesem Fall maximalen Überschneidung auf, d. h. sie werden synchron geöffnet und geschlossen. Dadurch, daß die beiden Ventile 14A, 14B gleichzeitig geöffnet sind, wird es einem maximalen Luftmassenstrom ermöglicht, die Verbrennungskammer 11 durch den Einlaßkanal 13 zu erreichen.

Im vorliegenden Ausführungsbeispiel kann das Einstellen der Phasenverschiebung zwischen den beiden Hubkurven A, B der Ventile 14A, 14B dadurch erfolgen, daß der Nullphasenwinkel der Nocken der einen Nockenwelle konstant gehalten wird, während der Nullphasenwinkel der Nocken der anderen Nockenwelle variiert wird. Insbesondere kann dabei der Nullphasenwinkel der Nockenwelle, welche dem Ventil 14A zugeordnet ist, konstant gehalten werden. Dies bedeutet, daß die Phasenlage des Lufteinlasses in die Verbrennungskammer 11 unabhängig von der Motordrehzahl konstant gehalten wird.

In einer alternativen Ausgestaltung kann die Ventilsteuerung jedoch auch so vorgenommen werden, daß zum Verändern der Phasenverschiebung zwischen den Ventilhubkurven A, B die Nullphasenwinkel beider Nockenwellen verändert werden. In dieser Ausgestaltung würde sich daher auch die Phasenlage des Öffnungszeitpunktes des Einlaßventils 14A, und damit der Zeitpunkt der Luft- bzw. der Gemischzufuhr in die Verbrennungskammer ändern. Dadurch gewinnt man einen weiteren Freiheitsgrad für die Motorsteuerung.

Im vorliegenden Ausführungsbeispiel liegt bei maximaler Motorleistung keine Phasenverschiebung zwischen den Hubkurven A, B der beiden Ventile 14A, 14B vor. Die Steuerung kann jedoch auch so ausgestaltet sein, daß die Phasenverschiebung bei Höchstleistung des Motors zwar minimal aber dennoch ungleich Null ist.

Im Ausführungsbeispiel sind den beiden in Reihe geschalteten Ventilen 14A, 14B der Ventilanordnung 14 zum Steuern des jeweiligen Ventilhubes getrennte Nockenwellen zugeordnet. In einer alternativen Ausgestaltung kann das Steuern der Ventilhübe der in Reihe geschalteten Ventile aber auch mittels einer gemeinsamen Nockenwelle erfolgen, wobei den Ventilen jeweils eigene Nocken zugeordnet sind. Die Nockenwelle ist dabei derart ausgestaltet, daß sich die den einzelnen Ventilen der Ventilanordnung zugeordneten Nocken relativ zueinander verdrehen lassen.

Obwohl im vorliegenden Ausführungsbeispiel nur zwei Ventile 14A, 14B hintereinander im Einlaßkanal 13 angeordnet sind, können in der erfindungsgemäßen Ventilanordnung auch drei oder mehr Ventile im Einlaßkanal hintereinander angeordnet sein. Insbesondere kann dann die Steuerung derart erfolgen, daß die Nullphasenwinkel für alle in Reihe geschalteten Ventile (oder ggf. für alle bis auf eines der in Reihe geschalteten Ventile) getrennt eingestellt werden können, um die Phasenbeziehungen zwischen den Hubkurven einzustellen.

Auch ist es möglich, eine erfindungsgemäße Ventilanordnung, wie sie beispielhaft im Ausführungsbeispiel beschrieben worden ist, anstatt im Einlaßkanal des Zylinders im Auslaßkanal des Zylinders anzuordnen. Die Anordnung im Auslaßkanal weist ein signifikantes Potential zum Reduzieren der Emissionswerte der Verbrennungsabgase auf. Schließlich besteht auch die Möglichkeit, sowohl im Einlaßkanal als auch im Auslaßkanal eines Zylinders jeweils eine erfindungsgemäße Ventilanordnung anzuordnen.

## Patentansprüche

1. Ventilanordnung zum Regulieren eines Fluidstroms in einen Zylinder (10) oder aus einem Zylinder (10) eines Verbrennungsmotors mit mindestens zwei Einlaßventilen (14A, 14B) zum Einlassen des Fluidstroms in den Zylinder (10) und/oder mindestens zwei Auslaßventilen zum Auslassen des Fluidstroms aus dem Zylinder (10),
**dadurch gekennzeichnet, daß**
die mindestens zwei Einlaßventile (14A, 14B) und/oder die mindestens zwei Auslaßventile in Strömungsrichtung des Fluids in Reihe geschaltet sind.

2. Verbrennungsmotor mit mindestens einem Zylinder (10) und einer dem Zylinder zugeordneten Ventilanordnung (14) nach Anspruch 1.

3. Verbrennungsmotor nach Anspruch 2,
**dadurch gekennzeichnet, daß**
die Einlaßventile (14A, 14B) und/oder die Auslaßventile derart ausgestaltet und angeordnet sind, daß die Ventilhübe individuell einzustellen sind.

4. Verbrennungsmotor nach Anspruch 3,
**dadurch gekennzeichnet, daß**
er außerdem eine Steuereinrichtung (15) umfaßt, die zum Ausgeben von individuellen Einlaßventilsteuergrößen an die einzelnen Einlaßventile (14A, 14B) und/oder zum Ausgeben von individuellen Auslaßventilsteuergrößen an die einzelnen Auslaßventile ausgestaltet ist.

5. Steuerverfahren zum Steuern der Fluidmenge, welche einem Zylinder eines Verbrennungsmotors nach Anspruch 4 zugeführt und/oder aus einem Verbrennungsmotor nach Anspruch 4 abgeführt wird,
**dadurch gekennzeichnet, daß**
das Steuern der zugeführten und/oder abgeführten Fluidmenge anhand einer Phasenverschiebung zwischen den Ventilhubkurven (A, B) der einzelnen Einlaßventile (14A, 14B) bzw. zwischen den Ventilhubkurven der einzelnen Auslaßventilen erfolgt.

6. Steuerverfahren nach Anspruch 5,
**dadurch gekennzeichnet, daß**
die Phasenverschiebung der Ventilhubkurven (A, B) in Abhängigkeit von der Motordrehzahl eingestellt wird.

7. Steuerverfahren nach Anspruch 6,
**dadurch gekennzeichnet, daß**
die Phasenverschiebung bei hoher Motordrehzahl ein Minimum aufweist.

8. Steuerverfahren nach Anspruch 7,
**dadurch gekennzeichnet, daß**
die Phasenverschiebung bei hoher Motordrehzahl den Wert Null besitzt.

9. Steuerverfahren nach einem der Ansprüche 6 bis 8,
**dadurch gekennzeichnet, daß**
die Phasenverschiebung bei niedriger Motordrehzahl, insbesondere bei Leerlaufdrehzahl, ein Maximum aufweist.
